(19) Europäisches Patentamt
European Patent Office
Office européen des brevets

(11) **EP 3 013 659 B1**

(12) **EUROPÄISCHE PATENTSCHRIFT**

(45) Veröffentlichungstag und Bekanntmachung des Hinweises auf die Patenterteilung:
**29.06.2022 Patentblatt 2022/26**

(21) Anmeldenummer: **14729614.9**

(22) Anmeldetag: **22.05.2014**

(51) Internationale Patentklassifikation (IPC):
**B60W 30/095** (2012.01)    **B60W 30/18** (2012.01)
**B60W 40/09** (2012.01)    **B60W 50/00** (2006.01)

(52) Gemeinsame Patentklassifikation (CPC):
**B60W 40/09; B60W 30/095; B60W 30/18154; B60W 30/18163;** B60W 50/0097; B60W 2050/005; B60W 2050/0075; B60W 2540/20; B60W 2556/10; B60W 2556/50

(86) Internationale Anmeldenummer:
**PCT/EP2014/060493**

(87) Internationale Veröffentlichungsnummer:
**WO 2014/206655 (31.12.2014 Gazette 2014/53)**

(54) **VORHERSAGE DES ZUKÜNFTIGEN FAHRPFADES EINES FAHRZEUGES**

PREDICTION OF A FUTURE DRIVING PATH OF A VEHICLE

PRÉVISION DE LA TRAJECTOIRE FUTURE D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.06.2013 DE 102013212360**

(43) Veröffentlichungstag der Anmeldung:
**04.05.2016 Patentblatt 2016/18**

(73) Patentinhaber: **Bayerische Motoren Werke Aktiengesellschaft**
**80809 München (DE)**

(72) Erfinder:
• **LIEBNER, Martin**
**80992 München (DE)**
• **KLANNER, Felix**
**639664 Singapore (SG)**
• **RUHHAMMER, Christian**
**80336 München (DE)**
• **KLÖDEN, Horst**
**80797 München (DE)**

(56) Entgegenhaltungen:
**EP-A1- 1 684 142    DE-A1-102004 035 571
DE-A1-102010 044 631    US-A1- 2011 098 922**

**Beschreibung**

Die Erfindung betrifft ein Verfahren zum Vorhersagen des zukünftigen Fahrpfades eines Fahrzeugs und ein entsprechendes Fahrerassistenzsystem.

Heutzutage werden in Fahrzeugen, insbesondere Personenkraftwagen (PKW), Systeme verbaut, die den Fahrer bei seiner Fahraufgabe unterstützen, sogenannte Fahrerassistenzsysteme. Es sind Fahrerassistenzsysteme bekannt, die den Fahrer in bestimmten Situationen vor Konflikten mit anderen Verkehrsteilnehmern warnen oder, in besonders kritischen Situationen, verzögernd in die Fahrzeugdynamik eingreifen. Dabei ist die Notwendigkeit bekannt, potenzielle Konflikte hinsichtlich ihrer Eintrittswahrscheinlichkeit zu beurteilen, um den Fahrer nicht mit einer Vielzahl überflüssiger Warnungen in der Durchführung seiner Fahraufgabe zu stören und so die Fahrsicherheit unter Umständen zu gefährden. Die tatsächliche Eintrittswahrscheinlichkeit eines Konflikts hängt sowohl von dem vom Fahrer präferierten Manöver als auch von dessen Situationsbewusstsein, also der Entscheidung des Fahrers, ob das präferierte Manöver durchführbar ist, ab. Diese Entscheidung kann unter Umständen auch noch einige Sekunden später revidiert werden, wenn der Fahrer während dieser Zeit zusätzliche Informationen, beispielsweise durch weitere Spiegel- oder Schulterblicke, erhält. Für die Entscheidung des Fahrerassistenzsystems über die Notwendigkeit einer Warnung ist es oftmals jedoch ausreichend, die Wahrscheinlichkeit dafür zu bestimmen, dass der Fahrer aktuell einen Handlungsplan verfolgt, bei dem dieser Konflikt auftritt. Aus der Literatur, insbesondere Holger Berndt und Klaus Dietmayer, "Driver intention inference with vehicle onboard sensors", 2009 IEEE International Conference on Vehicular Electronics and Safety (ICVES), pages 102-107, 2009; oder Georges S. Aoude, Vishnu R. Desaraju, Lauren H. Stephens, und Jonathan P. How, "Behavior classification algorithms at intersections and validation using naturalistic data", 2011 IEEE Intelligent Vehicles Symposium (IV), (IV) : 601-606, June 2011,sind Verfahren bekannt, die die Wahrscheinlichkeit dafür bestimmen, dass der Fahrer die Absicht hat, ein Manöver eines entsprechenden Typs, etwa ein Rechtsabbiege-Manöver oder einen Fahrstreifenwechsel, innerhalb eines bestimmten Vorausschauhorizonts durchzuführen. Dazu wird für jeden adressierten Manövertyp ein Klassifikator trainiert, der die Eintrittswahrscheinlichkeit eines entsprechenden Manövers auf Basis einer festen Menge von Merkmalen abzuschätzen kann. Es ist bekannt, dass für einen derartigen Klassifikator ein Naive-Bayes-Ansatz gewählt werden kann.

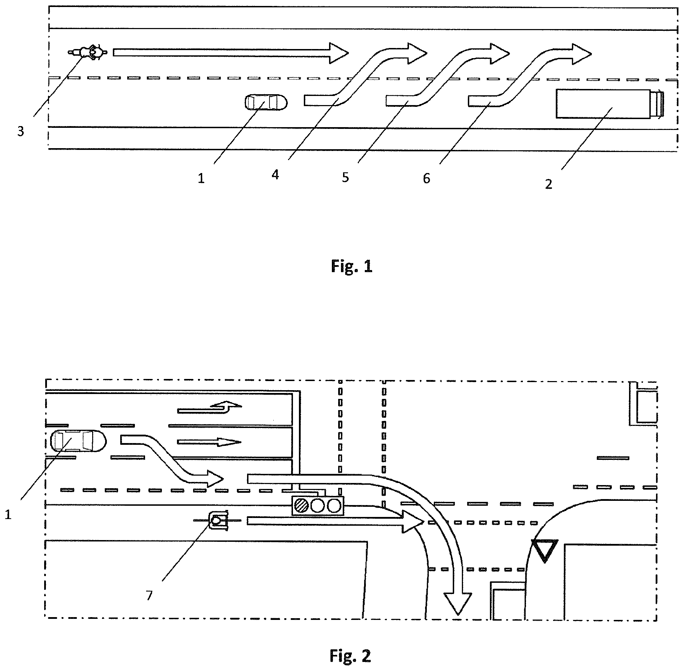

Ein Beispiel für den Einsatz eines Fahrerassistenzsystems wird nun mit Bezug auf Fig. 1 erläutert. Der Fahrer des betrachteten Fahrzeugs 1 (PKW) fährt auf dem rechten Fahrstreifen einer Autobahn und nähert sich dabei einem langsamer fahrenden LKW 2 auf demselben Fahrstreifen. Es besteht die Wahrscheinlichkeit, dass der Fahrer innerhalb der nächsten Sekunden einen Fahrstreifenwechsel durchführen möchte, um den LKW zu überholen. Gleichzeitig nähert sich von Hinten ein deutlich schnelleres Motorrad 3. Es wird davon ausgegangen, dass der Fahrer den Motorradfahrer übersieht. Je nach konkretem Zeitpunkt des Fahrstreifenwechsel sind folgende Situationen zu unterscheiden: 1. Der Fahrstreifenwechsei erfolgt so zeitig, dass dem Motorradfahrer ausreichend Zeit zum Reagieren und Abbremsen bleibt (Pfeil 4). Die Situation ist somit unkritisch, eine Reaktion des Fahrerassistenzsystems ist nicht oder nur in abgeschwächter Form erwünscht. 2. Der Fahrstreifenwechsel erfolgt zu einem Zeitpunkt, an dem sich der Motorradfahrer noch hinter dem PKW 1 befindet, ihm jedoch nicht mehr ausreichend Zeit zum Reagieren und Abbremsen bleibt (Pfeil 5). Diese Situation ist somit höchst gefährlich. Häufigste Unfallursache auf deutschen Autobahnen sind unzureichend abgesicherte Fahrstreifenwechsel. Hier ist eine Reaktion des Fahrerassistenzsystems ausdrücklich erwünscht. 3. Der Fahrstreifenwechsel erfolgt ohnehin erst, nachdem das Motorrad den PKW passiert hat (Pfeil 6). Die Situation ist somit unkritisch, eine Reaktion des Fahrerassistenzsystems nicht oder nur in abgeschwächter Form erwünscht. Ein Fahrstreifen wird auch als Fahrspur bezeichnet.

Ein weiteres Beispiel für den Einsatz eines Fahrerassistenzsystems wird im Folgenden mit Bezug auf Fig. 2 gegeben. Der Fahrer des betrachteten Fahrzeugs 1 (PKW) nähert sich einer innerstädtischen Kreuzung auf dem mittleren Fahrstreifen. Recht spät fällt ihm ein, dass er an dieser rechts abbiegen möchte. Der Wechsel auf den rechten Fahrstreifen erfolgt daher erst unmittelbar vor der Kreuzung. Durch das Fahrstreifenwechset-Manöver und die damit verbundenen Spiegelblicke sowie der Notwendigkeit des gleichzeitigen Abbremsens und des darauffolgenden Einlenkens werden die kognitiven Fähigkeiten des Fahrers in ihrer Gänze beansprucht. In der Folge besteht die Gefahr, dass er den Fahrradfahrer 7, der sich parallel zur Straße auf dem Radweg bewegt, übersieht, und es dadurch zu einer Kollision zwischen den beiden kommt. Das Ziel eines entsprechenden Fahrerassistenzsystems besteht darin, die drohende Kollision zu vermeiden. Dies kann dadurch erreicht werden, dass das Assistenzsystem in letzter Sekunde ein Bremsmanöver einleitet. Dies setzt jedoch eine sehr hohe Zuverlässigkeit in der Erkennung des Fahrradfahrers 7 sowie der Prädiktion dessen weiterer Trajektorie voraus, die zum aktuellen Zeitpunkt nur selten gegeben ist. Stattdessen soll der Fahrer des PKW 1 auf den Fahrradfahrer 7 hingewiesen werden, so dass er die Situation selbstständig und souverän bewältigen kann. Dies macht es jedoch erforderlich, dass das Assistenzsystem die Handlungsabsicht des Fahrers frühzeitig, d.h. in diesem Fall noch vor dem Wechsel auf den rechten Fahrstreifen, erkennt. Im konkreten Fall besteht die Handlungsabsicht des Fahrers in einem Fahrstreifenwechsel mit darauf folgendem Rechtsabbiegen. Bestehende Ansätze zur Fahrerintentionserkennung sind aber lediglich darauf ausgelegt, das jeweils nächste Fahrmanöver zu erkennen. In diesem Fall kommt ein Rechtsabbiege-Manöver als erstes Manöver jedoch nicht in Frage, da sich das Fahrzeug zunächst auf dem mittleren Fahrstreifen befindet, von welchem aus ein Rechtsabbiegen nicht möglich ist. Hinzu kommt, dass selbst die Verlässlichkeit der Vorhersage des ersten Manövers, dem Fahrstreifenwechsel, durch einen reinen Fahrstreifenwechselklassifikator durch die Überlagerung der durch die einzelnen Fahrmanöver bedingten Fahrerverhaltensweisen beeinträchtigt wird. Es ist also darüber hinaus ein Nachteil der bestehenden Ansätze, dass, sofern mehrere Manöver in Folge stattfinden, das zweite sowie jedes weitere Manöver in dieser Folge nicht mehr vorhergesagt werden können. Darüber hinaus kann die Überlagerung der für die einzelnen Teilmanöver typischen Fahrerverhaltensweisen dazu führen, dass selbst das erste Manöver nicht mehr zuverlässig vorhergesagt werden kann. Dokument DE 10 2010 044631 A1 offenbart ein Verfahren und eine Vorrichtung zur Bestimmung der Kollisionswahrscheinlichkeit eines Kraftfahrzeugs mit einem bewegten Objekt.

Dokument US 2011/0098922 A1 offenbart ein System, dass eine Kartendatenbank als einen Vorhersagesensor verwendet.

Dokument EP 1 684 142 A1 offenbart ein Verfahren zur Kursprädiktion in Fahrerassistenzsystemen für Kraftfahrzeuge, bei dem anhand von Informationen aus unterschiedlichen Informationsquellen eine Kurshypothese erstellt wird.

Dokument DE 10 2004 035 571 A1 offenbart eine Vorrichtung zur Fahrzeug-Positionsbestimmung mittels Ortung auf einem Verkehrswegenetz.

J Im Stand der Technik ist es weiterhin bekannt, den Zeitpunkt eines Fahrstreifenwechsels näherungsweise zu bestimmen, indem mehrere Klassifikatoren zur Vorhersage der Fahrstreifenwechselwahrscheinlichkeit zu jeweils einem festen Zeitpunkt in der Zukunft, beispielsweise 0s, 1s, 2s, 3s, 4s und 5s, trainiert werden. Dies birgt den Nachteil des erhöhten Entwicklungs- und Absicherungsaufwands.

Bestehende Ansätze erlauben keine Unterscheidung zwischen Abbiege-Manövern, die das Setzen des Fahrtrichtungsanzeigers in die gleiche Richtung erfordern, aber zu unterschiedlichen Zeitpunkten bzw. in unterschiedlichen Distanzen ausgeführt werden. Der Zeitpunkt des Blinkersetzens wird hierbei meist vernachlässigt, so dass ein untypisch zeitiges, möglichweise unbeabsichtigtes Aktivieren des Fahrtrichtungsanzeigers (Dauerblinken) nicht als solches erkannt wird und zu falschen Vorhersagen über die Fahrerabsicht und somit zu unangepassten Reaktionen des darauf basierenden Assistenzsystems führen kann.

Die der Erfindung zugrundeliegende Aufgabe ist es die oben genannten Nachteile zu überkommen.

Diese Aufgabe wird durch das Verfahren und das Fahrerassistenzsystem gemäß den unabhängigen Patentansprüchen gelöst. Vorteilhafte Weiterbildungen sind in den abhängigen Ansprüchen definiert.

Gemäß der Erfindung umfasst ein Verfahren zum Bewerten der Wahrscheinlichkeit, ob ein Fahrzeug einen möglichen Fahrpfad befährt, Folgendes: Bereitstellen der aktuellen Position des Fahrzeugs, insbesondere der aktuellen Entfernung der geographischen Position des Fahrzeugs von einer Referenzposition; Bereitstellen eines möglichen zukünftigen Fahrpfades des Fahrzeugs; Bereitstellen von Bedienangaben eines Fahrtrichtungsanzeigers, wobei die Bedienangaben angeben, ob der Fahrtrichtungsanzeiger an der aktuellen Position aktiviert ist und gegebenenfalls an welcher Position, insbesondere in welcher Entfernung von der Referenzposition, und in welche Richtung der Fahrtrichtungsanzeiger zuletzt aktiviert wurde; Parametrisieren eines Modells für die Bedienung des Fahrtrichtungsanzeigers abhängig von dem möglichen zukünftigen Fahrpfad, wobei das parametrierte Modell für die Bedienangaben des Fahrtrichtungsanzeigers und die aktuelle Position, insbesondere die aktuelle Entfernung, eine Auftrittsmaßzahl bereitstellt, nämlich eine Maßzahl für die Wahrscheinlichkeit, dass die Bedienangaben auf dem Fahrpfad auftreten, unter der Annahme, dass der Fahrer beabsichtigt, den möglichen zukünftigen Fahrpfad zu verfolgen; Bestimmen der Auftrittsmaßzahl mithilfe des parametrierten Modells.

Die Auftrittsmaßzahl gibt somit eine quantitative Vorhersage, ob der mögliche zukünftige Fahrpfad befahren wird. Gegebenenfalls kann diese Auftrittsmaßzahl, um eine Vorhersage zu treffen, zu Auftrittsmaßzahlen anderer Fahrpfade ins Verhältnis gesetzt werden. Ein Fahrtrichtungsanzeiger eines Fahrzeugs wird manchmal auch als Blinker bezeichnet.

Das Verfahren verwendet somit auch den Zeitpunkt, wann der Fahrtrichtungsanzeiger zuletzt aktiviert wurde, sofern er aktiviert ist. Somit kann auch die Fahrerabsicht bzw. der zukünftige Fahrpfad auch bei einer Kombination von aufeinanderfolgenden Fahrmanövern eruiert werden. Ein weiterer Vorteil ist der geringere Entwicklungs- und Absicherungsaufwand durch Verwendung eines Modells (Fahrerverhaitensmodel) anstelle von Klassifikatoren für spezielle Fahrmanöver bzw. dessen Zeitpunkt. Weiterhin kann die Genauigkeit der Vorhersage verbessert werden.

Die Entfernung der geographischen Position des Fahrzeugs von der Referenzposition kann anhand des Pfades, den das Fahrzeug von der Referenzposition zur aktuellen Position durchfahren musste, bestimmt werden. Die Referenzposition kann eine beliebig gewählte Position sein, die nur zu Referenzzwecken dient.

In einer Weiterbildung umfasst das Verfahren ferner: Bestimmen des oder der auf dem Fahrpfad auszuführenden Fahrmanöver; Parametrieren des Modells abhängig von dem oder den auszuführenden Fahrmanövern, insbesondere abhängig von dem nächsten auszuführenden Fahrmanöver. Auf diese Weise kann ein einziges Modell für verschiedene Fahrpfade und für auf diesen auszuführende Manöver verwendet werden. Jedes Fahrmanöver kann aus einer Gruppe von Fahrmanövern gewählt werden, die umfasst; Geradeausfahrt, Rechts-Abbiegen, Links-Abbiegen, Fahrspurwechsel nach links und Fahrspurwechsel nach rechts.

Das Modell für jedes Fahrmanöver der Gruppe von Fahrmanövern kann für die Bereitstellung der Auftrittsmaßzahl eine Wahrscheinlichkeitsverteilung vorgeben. Dabei gibt die Wahrscheinlichkeitsverteilung Wahrscheinlichkeiten für eine Aktivierung des Fahrtrichtungsanzeigers in Abhängigkeit des Ortes der Aktivierung an, und insbesondere auch Wahrscheinlichkeiten in Abhängigkeit der Richtung, in die der Fahrtrichtungsanzeiger aktiviert wird. Es wird somit vorteilhafterweise der Ort der letzten Aktivierung und die Richtung der Aktivierung des Fahrtrichtungsanzeigers bei der Bestimmung der Auftrittsmaßzahl berücksichtigt.

Die Wahrscheinlichkeitsverteilung kann für zumindest ein Fahrmanöver auf einer Normalverteilung basieren, deren Parameter, insbesondere deren Mittelwert und Varianz, mithilfe statistischer Auswertungen von Testfahrten, also vorhergehend durchgeführten Fahrten entlang des möglichen Fahrpfades, ermittelt wurden.

Die Bestimmung der Auftrittsmaßzahl umfasst erfindungsgemäß die folgende Berechnung (falls die Bedienangaben spezifizieren, dass der Fahrtrichtungsanzeiger aktiviert ist):

$$f_{\mathrm{R}}(s, s_{\mathrm{C}}) = P_{\mathrm{R}}\,\lambda\,e^{\lambda\,(s-s_{\mathrm{C}})}$$

Wobei:

$$\lambda = -\log(1 - P_{10})/\Delta s$$

Wobei:

s die Entfernung des Ortes, an dem der Fahrtrichtungsanzeiger aktiviert wurde, zu einem vorbestimmten Referenzpunkt auf der digitalen Karte angibt;

$s_{\mathrm{C}}$ die Entfernung der aktuellen Position zu dem vorbestimmten Referenzpunkt auf der digitalen Karte angibt,

$P_{\mathrm{R}}$ die Wahrscheinlichkeit dafür ist, dass der Fahrtrichtungsanzeiger aktiviert wird, obwohl der Fahrer geradeaus fährt und insbesondere ein Wert im Bereich zwischen 0,01 und 0,05 ist und

$P_{10}$ die Wahrscheinlichkeit ist, dass der Fahrer im Intervall von s bis s + $\Delta s$ den Fahrtrichtungsanzeiger deaktiviert nach einer Aktivierung beim Geradeausfahren und insbesondere ein Wert im Bereich von 1/300 bis 1/100 ist und $\Delta s$ eine vorbestimmte Wegstrecke ist, insbesondere ein Wert aus dem Bereich von 0,5 m bis 5 m.

In einem anderen Aspekt umfasst ein Fahrerassistenzsystem elektronische Verarbeitungsmittel, die dazu eingerichtet sind, eines der obenstehenden Verfahren auszuführen. Diese elektronischen Verarbeitungsmittel können ein Computer, insbesondere ein Mikrocontroller, oder anwendungsspezifische Schaltkreise sein.

KURZE BESCHREIBUNG DER ZEICHNUNGEN

Fig. 1 zeigt schematisch eine Fahrsituation, in der der Einsatz eines Fahrerassistenzsystems sinnvoll sein kann.

Fig. 2 zeigt schematisch eine weitere Fahrsituation, in der der Einsatz eines Fahrerassistenzsystems sinnvoll sein kann.

Fig. 3 zeigt ein Flussdiagramm des erfindungsgemäßen Verfahrens gemäß einem Ausführungsbeispiel.

Fig. 4 zeigt schematisch Beispiele für den Verlauf von Auftrittsmaßzahlen, die von einem Modell für einen Fahrtrichtungsanzeiger bereitgestellt werden gemäß einem Ausführungsbeispiel.

Fig. 5 zeigt ein Beispiel für den Verlauf von Auftrittsmaßzahlen, die von einem Modell für einen Fahrtrichtungsanzeiger bereitgestellt werden gemäß einem Ausführungsbeispiel.

DETAILLIERTE BESCHREIBUNG DER AUSFÜHRUNGSBEISPIELE

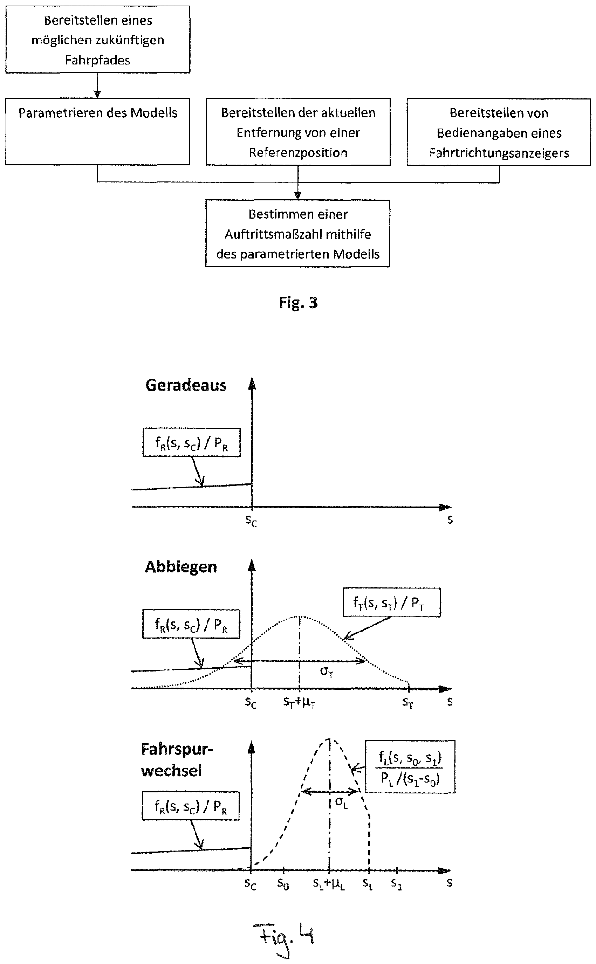

Fig. 3 zeigt ein Flussdiagramm des erfindungsgemäßen Verfahrens gemäß einem Ausführungsbeispiel.

Im Verfahren wird der mögliche zukünftige Fahrpfad bereitgestellt. Anhand des möglichen zukünftigen Fahrpfades wird das Modell parametriert. Dazu werden zunächst die auf dem Fahrpfad auszuführenden Fahrmanöver bestimmt und auch an welcher Entfernung von der Referenzposition aus das Fahrzeug das Fahrmanöver ausführt. Es wird angenommen, dass die Bedienung des Fahrtrichtungsanzeigers nur aufgrund des als nächstes vom Fahrzeug auszuführenden Fahrmanövers vorgenommen wird. Dementsprechend wird das Modell nur anhand des als nächstes auszuführenden Fahrmanövers parametriert. Generell kann jedoch auch eine Parametrierung des Modells anhand von Kombinationen von aufeinanderfolgenden Fahrmanövern vorgenommen werden. Der Fahrpfad kann anhand einer digitalen geographischen Karte und einer Positionierung des Fahrzeugs auf dieser Karte mittels GPS bestimmt werden bzw. auf Basis einer solchen Karte vorgegeben sein. Die auf dem Fahrpfad auszuführenden Fahrmanöver können ebenfalls mithilfe der digitalen Karte bestimmt werden. Der Fahrpfad ist gemäß dem Ausführungsbeispiel in Segmente von beispielsweise 100 m, 300 m oder 1 km aufgeteilt. Wenn ein Fahrspurwechsel vorgenommen werden soll, kann für das Segment, in dem der Fahrspurwechsel ausgeführt werden soll, gleichzeitig ein zweites Segment der Fahrspur vorgesehen sein, auf die das Fahrzeug wechselt. Dies ist insbesondere dann vorteilhaft, wenn, wie im vorliegenden Ausführungsbeispiel, in den vorgegebenen Fahrpfaden nur ein Fahrspurwechsel pro Segment angenommen wird.

Das Modell trifft im vorliegenden Ausführungsbeispiel eine Aussage für die Fahrmanöver: geradeaus Fahren, rechts Abbiegen, links Abbiegen, Fahrspurwechsel nach rechts, Fahrspurwechsel nach links. Das Modell berücksichtigt auch den Status des Fahrtrichtungsanzeigers zum Bewertungszeitpunkt, also ob und in welche Richtung der Fahrtrichtungsanzeiger aktiviert ist:

S    Zustand des Fahrtrichtungsanzeigers (deaktiviert, aktiviert nach rechts, aktiviert nach links).

Anschließend wird das Modell parametriert. Im vorliegenden Beispiel sind die Parameter: Das nächste auszuführende Fahrmanöver, der Zustand des Fahrtrichtungsanzeigers und bestimmte Eigenschaften der Geometrie des Fahrpfades (beispielsweise die Position einer Gabelung; die Geometrie wird im Folgenden mit den Formelbuchstaben $s_X$ beschrieben, wobei X=C, A, T, 0 oder 1).

Die folgende Tabelle detailliert die Parametrierung des Modells gemäß einem Ausführungsbeispiel und gibt Formelbezeichnungen für die Berechnung der Auftrittsmaßzahl an. Im vorliegenden Ausführungsbeispiel entspricht die Auftrittsmaßzahl gleich der entsprechenden Wahrscheinlichkeit. Es ist auch denkbar, eine Auftrittsmaßzahl zu verwenden, die auf einem Zwischenergebnis der Wahrscheinlichkeitsrechnung basiert, wobei das Zwischenergebnis trotzdem eine Aussage bezüglich der Ausführungswahrscheinlichkeit des Fahrpfades ermöglicht.

| Fahrmanöver | S = Links | S = Deaktiviert | S = Rechts |
|---|---|---|---|
| Geradeaus Fahren | $f_R(s_A, s_C)$ | $1 - 2P_R$ | $f_R(S_A, s_C)$ |
| Rechts Abbiegen | $f_R(S_A, s_c)$ | $1 - 2P_R - F_T(s_C, s_T)$ | $f_T(s_A, s_T) + f_R(S_A, s_C)$ |
| Links Abbiegen | $f_R(S_A, s_C) + f_r(S_A, s_T)$ | $1 - 2P_R - F_T(s_C, s_T)$ | $f_R(S_A, s_C)$ |
| Fahrspurwechsel nach rechts | $f_R(s_A, s_c)$ | $1 - 2P_R - F_L(s_C, s_0, s_1)$ | $f_L(s_A, s_0, s_1) + f_R(S_A, s_C)$ |
| Fahrspurwechsel nach links | $f_R(S_A, s_C) + f_L(S_A, s_0, s_1)$ | $1 - 2P_R - F_L(s_C, s_0, s_1)$ | $f_R(S_A, s_C)$ |

Dabei bedeuten:

$s_C$    Entfernung der aktuellen Position zu einer Referenzposition. Die Referenzposition kann willkürlich gesetzt sein, wird aber vorteilhafterweise einige hundert Meter vor der aktuellen Position gesetzt.

$s_A$    Entfernung zum Ort, an dem der Fahrtrichtungsanzeiger in seinen gegenwärtigen Zustand versetzt wurde, falls er aktiviert wurde.

$s_T$    Entfernung zum Gabelpunkt der Abbiegung

$s_0$    Beginn des Segments des Fahrspurwechsels (als Entfernung vom Referenzpunkt), oder, wenn $s_0 < s_C$, die aktuelle Entfernung $s_C$

$s_1$    Das Ende des Segmentes des Fahrspurwechsels (als Entfernung vom Referenzpunkt)

Im Einzelnen berechnen sich die Wahrscheinlichkeiten zu:

$$f_{\mathrm{R}}(s, s_{\mathrm{C}}) = P_{\mathrm{R}}\, \lambda\, e^{\lambda\,(s-s_{\mathrm{C}})}$$

Wobei

$$\lambda = -\log(1 - P_{10})/\Delta s$$

$P_{\mathrm{R}}$ ist die Wahrscheinlichkeit dafür, dass der Fahrtrichtungsanzeiger aktiviert wird, obwohl der Fahrer geradeaus fährt und ist insbesondere ein Wert im Bereich zwischen 0,01 und 0,05 ist. Typische Werte für $P_{\mathrm{R}}$ sind 0,015; 0,02; 0,025.

$P_{10}$ ist die Wahrscheinlichkeit dafür, dass der Fahrer im Intervall von s bis s + $\Delta$s den Fahrtrichtungsanzeiger deaktiviert nach einer Aktivierung beim Geradeausfahren und ist insbesondere ein Wert im Bereich von 1/300 bis 1/100 ist. Typische Werte für $P_{10}$ sind 1/150; 1/200; 1/250.

$\Delta$s ist eine vorbestimmte Wegstrecke, insbesondere ein Wert aus dem Bereich von 0,5 m bis 5 m. Typische Werte für $\Delta s$ sind 0,5 m; 1 m; 1,5 m.

$$f_{\mathrm{T}}(s, s_{\mathrm{T}}) = \frac{P_T\, q_T}{\sqrt{2\,\pi}\,\sigma_{\mathrm{T}}}\, \exp\left[-\frac{1}{2}\left(\frac{s - s_{\mathrm{T}} - \mu_{\mathrm{T}}}{\sigma_{\mathrm{T}}}\right)^2\right]$$

$P_{\mathrm{T}}$ ist die Gesamtwahrscheinlichkeit einer Aktivierung des Fahrtrichtungsanzeigers aufgrund eines Abbiegens und ist insbesondere ein Wert im Bereich von 0,4 bis 0,8. Typischerweise ist $P_{\mathrm{T}}$ = 0,78. $\mu_{\mathrm{T}}$ ist der Mittelwert für die Entfernung der Aktivierung des Fahrtrichtungsanzeigers aufgrund eines Abbiegens vor dem Gabelpunkt, $\mu_{\mathrm{T}}$ ist beispielsweise -55,6 m. $\sigma_{\mathrm{T}}$ ist die Standardabweichung für die Aktivierung des Fahrtrichtungsanzeigers aufgrund eines Abbiegens vor dem Gabelpunkt, beispielsweise gilt $\sigma_T$ = 25,3m.

$$q_{\mathrm{T}}^{-1} = \int_{-\infty}^{s_{\mathrm{T}}} \frac{f_{\mathrm{T}}(s, s_{\mathrm{T}})}{P_{\mathrm{T}}\, q_{\mathrm{T}}}\, ds = \frac{1}{2}\left[1 + \mathrm{erf}\left(\frac{-\mu_{\mathrm{T}}}{\sqrt{2}\,\sigma_{\mathrm{T}}}\right)\right]$$

mit

$$\mathrm{erf}(x) = \frac{2}{\sqrt{\pi}}\int_{0}^{x} e^{-t^2}\, dt$$

$$F_{\mathrm{T}}(s, s_{\mathrm{T}}) = \frac{P_{\mathrm{T}}\, q_{\mathrm{T}}}{2}\left[1 + \mathrm{erf}\left(\frac{s - s_{\mathrm{T}} - \mu_{\mathrm{T}}}{\sqrt{2}\,\sigma_{\mathrm{T}}}\right)\right]$$

$$f_{\mathrm{L}}(s, s_0, s_1) = \frac{P_{\mathrm{L}}\, q_{\mathrm{L}}}{2\,(s_1 - s_0)}\, \mathrm{erf}\left(\frac{s - s' - \mu_{\mathrm{L}}}{\sqrt{2}\,\sigma_{\mathrm{L}}}\right)\Bigg|_{s'=s_1}^{s'=s_0}$$

$P_L$ ist die Gesamtwahrscheinlichkeit einer Aktivierung des Fahrtrichtungsanzeigers aufgrund eines Spurwechsels innerhalb eines Segmentes von $s_0$ bis $s_1$, wobei $P_L$ typischerweise 0,68 ist. $\mu_L$ beschreibt der Mittelwert für die Entfernung der Aktivierung des Fahrtrichtungsanzeigers aufgrund eines Fahrspurwechsels vor dem Fahrspurwechsel, e.g. $\mu_L = v_C * -2{,}83\ s$, wobei $v_C$ die gegenwärtige Geschwindigkeit ist. $\sigma_L$ ist die Standardabweichung für die Aktivierung des Fahrtrichtungsanzeigers aufgrund eines Abbiegens vor dem Gabelpunkt, beispielsweise gilt $\sigma_L = v_C * 0{,}61\ s$. erf(...) sowie $q_L$ wie oben.

$$F_{\mathrm{L}}(s, s_0, s_1) =$$

$$\frac{P_{\mathrm{L}}\, q_{\mathrm{L}}}{2} \left[ 1 + \frac{\sqrt{2}\, \sigma_{\mathrm{L}}}{s_1 - s_0}\ H\left( \frac{s - s' - \mu_{\mathrm{L}}}{\sqrt{2}\, \sigma_{\mathrm{L}}} \right) \Bigg|_{s' = s_1}^{s' = s_0} \right]$$

mit dem indefiniten Integral:

$$H(x) = \int \mathrm{erf}(x)\, dx = x\ \mathrm{erf}(x) + \frac{1}{\sqrt{\pi}}\, e^{-x^2} + C.$$

Fig. 4 zeigt schematisch Beispiele für den Verlauf der oben dargestellten einzelnen Berechnungselementen $f_R$, $f_T$ und $f_L$.

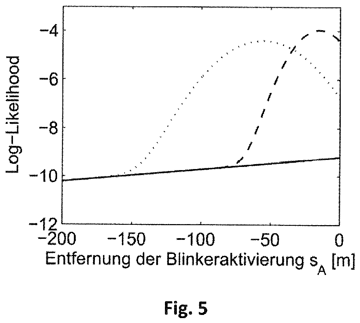

Fig. 5 zeigt ein Beispiel für den Verlauf von Auftrittsmaßzahlen für verschiedene als nächstes auszuführende Manöver. Im Diagramm gibt die gepunktete Kurve den Logarithmus für die Auftrittsmaßzahl eines Abbiegemanövers an, die gestrichelte Kurve gibt den Logarithmus der Auftrittsmaßzahl eines Fahrspurwechsels an und die durchgezogene Kurve gibt den Logarithmus der Auftrittsmaßzahl bei einer Geradeausfahrt an.

Wieder mit Bezug auf Fig. 3 wird die aktuelle Entfernung des Fahrzeugs von einer Referenzposition bereitgestellt, dies wird oben mit dem Formelbuchstaben $s_C$ bezeichnet. Die aktuelle Entfernung kann durch eine absolute Positionierung auf der Erde mittels GPS und/oder GLONASS und anschließendes In-Bezug-Setzen zu einer Referenzposition berechnet werden. Die Entfernung kann entlang des Pfades gemessen werden, den das Fahrzeug von der Referenzposition aus zu durchfahren hätte. Die Referenzposition dient zur Vereinfachung der Berechnung der Auftrittsmaßzahl. Generell wird innerhalb des Modells die Position des Fahrzeugs bei der Berechnung der Auftrittsmaßzahl als eindimensionale Größe angenommen, nämlich die Entfernung von der Referenzposition. Die Referenzposition und die eindimensionale Betrachtung dienen der Vereinfachung der Berechnung.

Es werden Bedienangaben eines Fahrtrichtungsanzeigers bereitgestellt. Dies kann den aufgezeichneten Verlauf der Bedienung des Fahrtrichtungsanzeigers über der Zeit oder über der vom Fahrzeug zurückgelegten Strecke bzw. der Entfernung von der Referenzposition umfassen. Ebenso kann die Bedienangabe auch nur den Zustand des Fahrtrichtungsanzeigers und die Entfernung zur Referenzposition, an der sich das Fahrzeug bei der letzten Aktivierung befand, umfassen.

Schließlich wird die Auftrittsmaßzahl mithilfe des parametrierten Modells, der aktuellen Position bzw. Entfernung und den Bedienangaben. Die Auftrittsmaßzahl wird in diesem Ausführungsbeispiel gemäß der oben angegebenen Tabelle bestimmt.

## Patentansprüche

1. Verfahren zum Bewerten der Wahrscheinlichkeit, ob ein Fahrzeug einen möglichen Fahrpfad befährt, umfassend:

   Bereitstellen der aktuellen Entfernung der geographischen Position des Fahrzeugs von einer Referenzposition;
   Bereitstellen eines möglichen zukünftigen Fahrpfades des Fahrzeugs;
   Bereitstellen von Bedienangaben eines Fahrtrichtungsanzeigers, wobei die Bedienangaben angeben, ob der Fahrtrichtungsanzeiger an der aktuellen Position aktiviert ist und, falls er aktiviert wurde, in welcher Entfernung von der Referenzposition, und in welche Richtung der Fahrtrichtungsanzeiger zuletzt aktiviert wurde;
   Parametrisieren eines Modells für die Bedienung des Fahrtrichtungsanzeigers abhängig von dem möglichen zukünftigen Fahrpfad, wobei das parametriete Modell für die Bedienangaben des Fahrtrichtungsanzeigers und die aktuelle Entfernung eine Auftrittsmaßzahl bereitstellt, nämlich eine Maßzahl für die Wahrscheinlichkeit, dass die Bedienangaben auf dem Fahrpfad auftreten, unter der Annahme, dass der Fahrer beabsichtigt, den möglichen zukünftigen Fahrpfad zu verfolgen, wobei die Auftrittsmaßzahl eine Aussage bezüglich der Ausführungswahrscheinlichkeit des Fahrpfades ermöglicht;
Bestimmen der Auftrittsmaßzahl mithilfe des parametrierten Modells;
wobei die Bestimmung der Auftrittsmaßzahl die folgende Berechnung umfasst, falls die Bedienangaben spezifizieren, dass der Fahrtrichtungsanzeiger aktiviert ist:

$$f_{\mathrm{R}}(s, s_{\mathrm{C}}) = P_{\mathrm{R}}\,\lambda\,e^{\lambda\,(s-s_{\mathrm{C}})}$$

Wobei:

$$\lambda = -\log(1 - P_{10})/\Delta s$$

Wobei:

s die Entfernung des Ortes, an dem der Fahrtrichtungsanzeiger aktiviert wurde, zu einem vorbestimmten Referenzpunkt auf der digitalen Karte angibt;
$s_{\mathrm{C}}$ die Entfernung der aktuellen Position zu dem vorbestimmten Referenzpunkt auf der digitalen Karte angibt,
$P_{\mathrm{R}}$ die Wahrscheinlichkeit dafür ist, dass der Fahrtrichtungsanzeiger aktiviert wird, obwohl der Fahrer geradeaus fährt und insbesondere ein Wert im Bereich zwischen 0,01 und 0,05 ist und
$P_{10}$ die Wahrscheinlichkeit ist, dass der Fahrer im Intervall von s bis s + $\Delta$s den Fahrtrichtungsanzeiger deaktiviert nach einer Aktivierung beim Geradeausfahren und insbesondere ein Wert im Bereich von 1/300 bis 1/100 ist und
$\Delta$s eine vorbestimmte Wegstrecke ist, insbesondere ein Wert aus dem Bereich von 0,5 m bis 5 m.

2. Verfahren nach Anspruch 1, ferner umfassend:

Bestimmen des oder der auf dem Fahrpfad auszuführenden Fahrmanöver;
Parametrieren des Modells abhängig von dem oder den auszuführenden Fahrmanövern, insbesondere abhängig von dem nächsten auszuführenden Fahrmanöver.

3. Verfahren nach Anspruch 2,
wobei bei der Bestimmung des oder der auszuführenden Fahrmanöver jedes Fahrmanöver aus einer Gruppe von Fahrmanövern gewählt wird, die umfasst: Geradeausfahrt, Rechts-Abbiegen, Links-Abbiegen, Fahrspurwechsel nach links und Fahrspurwechsel nach rechts.

4. Verfahren nach Anspruch 3, wobei das Modell für jedes Fahrmanöver der Gruppe von Fahrmanövern für die Bereitstellung der Auftrittsmaßzahl eine Wahrscheinlichkeitsverteilung vorgibt, wobei die Wahrscheinlichkeitsverteilung Wahrscheinlichkeiten für eine Aktivierung des Fahrtrichtungsanzeigers in Abhängigkeit des Ortes der Aktivierung angibt, und insbesondere auch abhängig ist, von der Richtung, in die der Fahrtrichtungsanzeiger aktiviert wurde.

5. Verfahren nach Anspruch 3 oder 4, wobei die Wahrscheinlichkeitsverteilung für zumindest ein Fahrmanöver auf einer Normalverteilung basiert, deren Parameter, insbesondere deren Mittelwert und Varianz, mithilfe statistischer Auswertungen von Testfahrten ermittelt wurden.

6. Fahrerassistenzsystem, umfassend elektronische Verarbeitungsmittel, die dazu eingerichtet sind, ein Verfahren nach einem der vorhergehenden Ansprüche auszuführen.

**Claims**

1. Method for assessing the probability of a vehicle driving along a possible driving path, comprising:

providing the current distance between the geographical position of the vehicle and a reference position;
providing a possible future driving path of the vehicle;
providing operating information for a direction indicator, wherein the operating information indicates whether the direction indicator is activated at the current position and, if it has been activated, at what distance from the reference position and in which direction the direction indicator was last activated;
parameterizing a model for operating the direction indicator on the basis of the possible future driving path, wherein the parameterized model provides an occurrence measure for the operating information for the direction indicator and the current distance, specifically a measure of the probability of the operating information occurring on the driving path, assuming that the driver intends to follow the possible future driving path, wherein the occurrence measure enables a statement with respect to the execution probability of the driving path;
determining the occurrence measure with the aid of the parameterized model;
wherein the determination of the occurrence measure comprises the following calculation if the operating information specifies that the direction indicator is activated:

$$f_{\mathrm{R}}(s, s_{\mathrm{C}}) = P_{\mathrm{R}}\, \lambda\, e^{\lambda\,(s - s_{\mathrm{C}})}$$

where:

$$\lambda = -\log(1 - P_{10})/\Delta s$$

where:

$s$ indicates the distance between the location at which the direction indicator was activated and a predetermined reference point on the digital map;
$s_{\mathrm{c}}$ indicates the distance between the current position and the predetermined reference point on the digital map,
$P_{\mathrm{R}}$ is the probability of the direction indicator being activated even though the driver is driving straight ahead and, in particular, is a value in the range between 0.01 and 0.05, and
$P_{10}$ is the probability of the driver deactivating the direction indicator in the interval from $s$ to $s + \Delta s$ following activation when driving straight ahead and, in particular, is a value in the range from 1/300 to 1/100, and $\Delta s$ is a predetermined distance, in particular a value from the range of 0.5 m to 5 m.

2. Method according to Claim 1, also comprising:

determining the driving manoeuvre(s) to be carried out on the driving path;
parameterizing the model on the basis of the driving manoeuvre(s) to be carried out, in particular on the basis of the next driving manoeuvre to be carried out.

3. Method according to Claim 2, wherein, when determining the driving manoeuvre(s) to be carried out, each driving manoeuvre is selected from a group of driving manoeuvres comprising: driving straight ahead, turning right, turning left, lane change to the left and lane change to the right.

4. Method according to Claim 3, wherein the model for each driving manoeuvre in the group of driving manoeuvres specifies a probability distribution for providing the occurrence measure, wherein the probability distribution indicates probabilities for activating the direction indicator on the basis of the activation location and, in particular, also depends on the direction in which the direction indicator was activated.

5. Method according to Claim 3 or 4, wherein the probability distribution for at least one driving manoeuvre is based on a normal distribution, the parameters of which, in particular the mean value and variance of which, were determined with the aid of statistical evaluations of test drives.

6. Driver assistance system comprising electronic processing means which are configured to carry out a method according to one of the preceding claims.

**Revendications**

1. Procédé d'évaluation de la probabilité qu'un véhicule emprunte un chemin de roulement possible, ledit procédé comprenant les étapes suivantes :

   fournir la distance actuelle de la position géographique du véhicule à une position de référence ;
   fournir un chemin de roulement futur possible du véhicule ;
   fournir des informations de fonctionnement d'un clignotant, les informations de fonctionnement indiquant si le clignotant est activé à la position actuelle et,
   s'il a été activé, à quelle distance de la position de référence, et dans quelle direction, l'indicateur de direction a été activé pour la dernière fois ;
   paramétrer un modèle de fonctionnement de le clignotant en fonction du chemin de roulement futur possible, le modèle paramétré pour les informations de fonctionnement du clignotant et la distance actuelle fournissant un indice d'occurrence, c'est-à-dire un indice de probabilité que les informations de fonctionnement surviennent sur le chemin de roulement, en supposant que le conducteur a l'intention de suivre le chemin de roulement futur possible, l'indice d'occurrence permettant de se prononcer sur la probabilité d'exécution du chemin de roulement ;
   déterminer l'indice d'occurrence à l'aide du modèle paramétré ;
   la détermination de l'indice d'occurrence comprenant le calcul suivant si les informations de fonctionnement spécifient que le clignotant est activé :

   $$f_R(s, s_C) = P_R \lambda e^{\lambda(s - s_C)}$$

   où :

   $$\lambda = -\log(1 - P_{10}) / \Delta s$$

   où

   s indique la distance de l'endroit où le clignotant a été activé à un point de référence prédéterminé sur la carte numérique ;
   se indique la distance de la position actuelle au point de référence prédéterminé sur la carte numérique,
   $P_R$ est la probabilité que le clignotant soit activé bien que le conducteur roule tout droit et est notamment à une valeur comprise entre 0,01 et 0,05 et
   $P_{10}$ est la probabilité que le conducteur désactive le clignotant dans l'intervalle de s à s + $\Delta$s après l'activation lorsqu'il roule tout droit et est notamment à une valeur comprise entre 1/300 et 1/100 et
   $\Delta$s est une distance prédéterminée, notamment une valeur comprise entre 0,5 m et 5 m.

2. Procédé selon la revendication 1, comprenant en outre les étapes suivantes :

   déterminer la ou les manœuvres de roulement à effectuer sur le chemin de roulement ;
   paramétrer le modèle en fonction de la ou des manœuvres de roulement à effectuer, notamment en fonction de la prochaine manœuvre de roulement à effectuer.

3. Procédé selon la revendication 2,
   lors de la détermination de la ou des manœuvres de roulement à effectuer, chaque manœuvre de roulement étant choisie dans un groupe de manœuvres de roulement qui comprend : rouler tout droit, tourner à droite, tourner à gauche, changer de voie de roulement vers la gauche et changer de voie de roulement vers la droite.

4. Procédé selon la revendication 3, le modèle de chaque manœuvre de roulement du groupe de manœuvres de roulement spécifiant pour la fourniture de l'indice d'occurrence une distribution de probabilité, la distribution de probabilité indiquant des probabilités d'activation du clignotant en fonction de l'endroit de l'activation, et notamment en fonction également de la direction dans laquelle le clignotant a été activé.

5. Procédé selon la revendication 3 ou 4, la distribution de probabilité d'au moins une manœuvre de conduite étant basée sur une distribution normale dont les paramètres, notamment leur valeur moyenne et leur variance, ont été déterminés à partir d'évaluations statistiques d'essais routiers.

6.  Système d'aide à la conduite, comprenant des moyens de traitement électronique qui sont conçus pour mettre en œuvre un procédé selon l'une des revendications précédentes.

**Fig. 1**

**Fig. 2**

Bereitstellen eines
möglichen zukünftigen
Fahrpfades

Parametrieren des Modells

Bereitstellen der aktuellen
Entfernung von einer
Referenzposition

Bereitstellen von
Bedienangaben eines
Fahrtrichtungsanzeigers

Bestimmen einer
Auftrittsmaßzahl mithilfe
des parametrierten Modells

**Fig. 3**

**Geradeaus**

$f_R(s, s_C) / P_R$

$s_C$

$s$

**Abbiegen**

$f_T(s, s_T) / P_T$

$f_R(s, s_C) / P_R$

$\sigma_T$

$s_C$   $s_T + \mu_T$   $s_T$   $s$

**Fahrspurwechsel**

$\dfrac{f_L(s, s_0, s_1)}{P_L /(s_1 - s_0)}$

$f_R(s, s_C) / P_R$

$\sigma_L$

$s_C$   $s_0$   $s_L + \mu_L$   $s_L$   $s_1$   $s$

Fig. 4

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010044631 A1
- US 20110098922 A1
- EP 1684142 A1
- DE 102004035571 A1

**In der Beschreibung aufgeführte Nicht-Patentliteratur**

- **HOLGER BERNDT ; KLAUS DIETMAYER.** Driver intention inference with vehicle onboard sensors. *2009 IEEE International Conference on Vehicular Electronics and Safety (ICVES),* 2009, 102-107
- **GEORGES S. AOUDE ; VISHNU R. DESARAJU ; LAUREN H. STEPHENS ; JONATHAN P. HOW.** Behavior classification algorithms at intersections and validation using naturalistic data. *2011 IEEE Intelligent Vehicles Symposium (IV),* Juni 2011, vol. IV, 601-606